**Europäisches Patentamt**

(19) **European Patent Office**

**Office européen des brevets**

(11) Veröffentlichungsnummer: **0 110 001**
**B1**

(12) # EUROPÄISCHE PATENTSCHRIFT

(45) Veröffentlichungstag der Patentschrift:
**19.11.87**

(51) Int. Cl.⁴: **F 16 C 39/04,** F 16 C 19/36

(21) Anmeldenummer: **82830287.7**

(22) Anmeldetag: **24.11.82**

(54) Kombination eines hydrostatischen Lagers mit einem Rollenlager.

(43) Veröffentlichungstag der Anmeldung:
**13.06.84 Patentblatt 84/24**

(45) Bekanntmachung des Hinweises auf die Patenterteilung:
**19.11.87 Patentblatt 87/47**

(84) Benannte Vertragsstaaten:
**CH DE FR GB IT LI**

(56) Entgegenhaltungen:
**EP - A - 0 038 306**
**DE - A - 2 931 348**
**DE - B - 1 262 080**
**DE - B - 1 271 470**
**DE - B - 1 810 724**
**DE - C - 943 980**
**DE - U - 1 941 530**
**FR - A - 946 559**
**FR - A - 1 088 917**
**FR - A - 1 531 128**

**TRANSACTIONS OF THE ASME, Band 102, Nr. 2, April 1980, New York, W.L. Bowen et al.: "The hollow roller bearing", Seiten 222-227**

(73) Patentinhaber: **Bonaccorso, Francesco, Via G. La Farina, 163, I-98100 Messina (IT)**

(72) Erfinder: **Bonaccorso, Francesco, Via G. La Farina, 163, I-98100 Messina (IT)**

(74) Vertreter: **Sneider, Massimo, Lenzi & C. Via Lucania, 13, I-00187 Roma (IT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Beschreibung

Die Erfindung betrifft ein Drehlager bestehend aus einem Innenring mit Abrollbahn, einem Aussenring mit Abrollbahn, zwischen den Abrollbahnen angeordneten Rollen und einer Anzahl von über den Lagerumfang verteilten Bohrungen zur Speisung eines Druckfluides in den Spalt zwischen Innnenring und Aussenring.

Es ist bekannt, dass auf dem Gebiet der Lager, seien es Gleitlager oder seien es Rollenlager, seit langem das Prinzip des hydrostatischen Schubes zur Anwendung kommt. Bei den Gleitlagern bewerkstelligt dieser Schub immer eine Flüssigkeitsreibung, auch bei geringen Geschwindigkeiten, anstelle der Mischreibung (Flüssigkeits- u. Gleitreibung), welche sich bei normalen Lagern einstellt. Bei den Rollenlagern kann die Last von der Gegenwirkung eines Druckfluides, von der Reaktion, d.h. Gegenwirkung der Rollen bei Druckmangel, von der vereinigten Gegenwirkung des Schubes und der Rollen abgefangen werden. Besonders die beiden deutschen Auslegeschriften DE-B 1 262 080 und DE-B 1 271 470 bewerkstelligen das Schweben, bzw. den Auftrieb, nur im Falle einer einseitig gerichteten Last und von konstantem Sinne, und der hydrostatische Auftriebsschub passt sich der Last nicht an, wenn diese Änderungen erfährt. Nicht nur wenn sich die Intensität und der Sinn der Last ändern, sondern auch wenn sich die Richtung wenig verändert, kann es daher vorkommen, dass der hydrostatische Schub die Last erhöht anstatt sie zu vermindern. Weiters weist die genannte deutsche Auslegeschrift DE-B 1 262 080 im Käfig Taschen auf, welche das Problem der Dichtigkeit nicht lösen, zumal das Öl gleichfalls durch die Spiele fliessen kann, welche zwischen den Rollen vorgesehen werden müssen. Unter Berücksichtigung der Inkompressibilität der Flüssigkeit ist somit eine kleinste Ölmenge hinreichend um die plötzliche Erhöhung des Druckes zu bewirken.

Der Erfindung liegt deshalb die Aufgabe zugrunde, ein Lager zu schaffen, welches in der Lage ist auf beliebige in Richtung und Sinne veränderliche Lasten zu reagieren und weiters in der Lage ist, den hydrostatischen Schub automatisch der Intensität der Last anzupassen. Weiters soll das erfindungsgemässe Lager mit verhältnismässig geringen Öldurchsätzen arbeiten.

Diese Aufgabe wird im wesentlichen dadurch gelöst, dass die Rollen durch hohle, mit leichtem Übermass montierte Rollen in Gruppen gleicher Anzahl unterteilt sind, wobei die Anzahl der Bohrungen der Anzahl der Gruppen entspricht.

Der Erfindungsgegenstand bezieht sich im einzelnen auf ein Trag- und Schubrollenlager mit feststehendem Gehäuse oder feststehender Welle, mit zylindrischen oder konischen Rollen, bei dem der Kranz der Rollen in von mit leichtem Übermass zwischen den Bahnen der beiden Ringe des Lagers montierten hohlen Rollen getrennte Gruppen aufgeteilt ist, so dass sich eine gewisse Anzahl von den beiden Ringen und von den hohlen Rollen begrenzte Kammern bilden, welche von ebensovielen Druckverminderungsleitungen gespeist werden. Das sich unter Druck befindliche Öl tritt in die Kammern durch die Leitungen ein und tritt aus den zwischen den beiden Ringen des Lagers befindlichen Ringgängen aus ohne dabei durch die Wirkung des von den hohlen Rollen bewirkten Verschlusses von einer Kammer zu den benachbarten Kammern fliessen zu können. Wenn die vom Lager abgestützte Welle durch die Wirkung einer Last beliebigen Ausmasses, beliebiger Richtung und beliebigen Sinnes, sich in einer aussermittigen Lage befindet, so wird sich in dieser Kammer ein Differenzdruck aufbauen, welcher auf die Last eine angemessene Gegenwirkung hervorrufen wird. Das in Frage stehende Lager bewerkstelligt einen hydrostatischen Druck, welcher in der Lage ist in jeder Richtung und in jedem Sinne und weitaus wirkungsvoller zu reagieren als der bei herkömmlichen Lagern bewerkstelligte Druck, u.zw. durch die Gegenwart der durch die hohlen Rollen abgedichteten Kammern, welche erstere eben das besondere Merkmal der Erfindung darstellen.

Bei einer bevorzugten Ausführungsform des Drehlagers ist vorgesehen, dass in den Enden der hohlen Rollen Dichtstössel montiert sind, welche mittels Federn gegen radial abstehende Bünde eines Ringes gedrückt sind. Weiters ist erfindungsgemäss vorgesehen, dass die Bohrungen im Aussenring eingearbeitet sind oder dass die Bohrungen im Innenring eingearbeitet sind. Erfindungsgemäss wird schliesslich vorgeschlagen, dass die zwischen den Ringen angeordneten Rollen zylindrisch oder konisch gestaltet sind.

Anhand der anliegenden Zeichnungen wird der Erfindungsgegenstand noch eingehender erläutert. In den Zeichnungen selbst zeigen:

Fig. 1 und 1A das erfindungsgemässe Lager in seiner Gesamtheit;

Fig. 2 und 2A schematisch das Prinzip des hydrostatischen Auftriebes bei Lastabwesenheit (Schema A) und bei Lastgegenwart (Schema B);

Fig. 3 und 3A den zentralen, d.h. mittleren, Ring $B_2$ eines Lagers mit drehender Welle, bei dem aussen die Druckabbaukanäle und innen die Abrollbahn der Rollen vorgesehen sind;

Fig. 4 in axonometrischer Ansicht das vollständige Lager für eine drehende Welle;

Fig. 5 und 5A den mittleren Ring $B_2$ eines Lagers mit drehendem Gehäuse, bei dem innen die Druckabbaukanäle und aussen die Abrollbahn der Rollen vorgesehen sind;

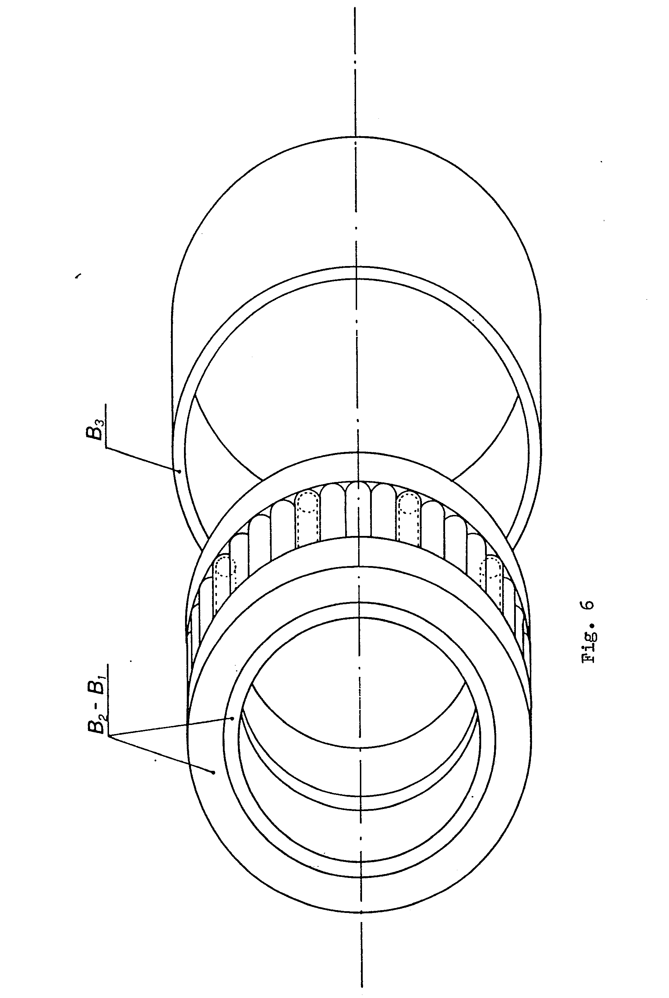

Fig. 6 in axonometrischer Ansicht das vollständige Lager für ein drehendes Gehäuse;

Fig. 7 und 7A ein bauliches Merkmal der hohlen Rollen.

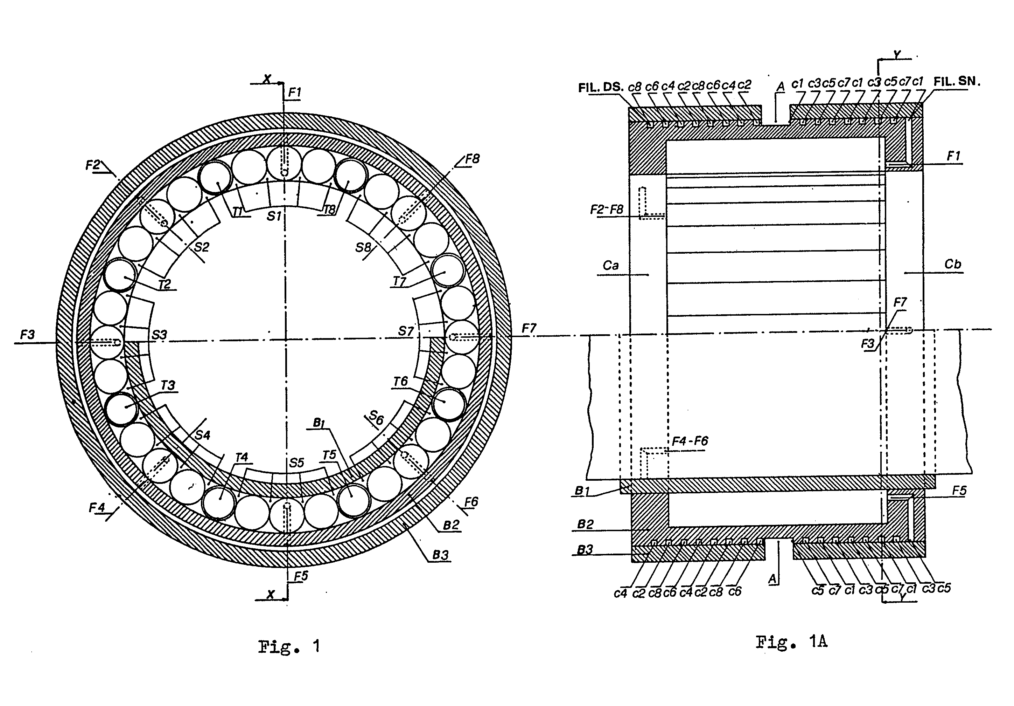

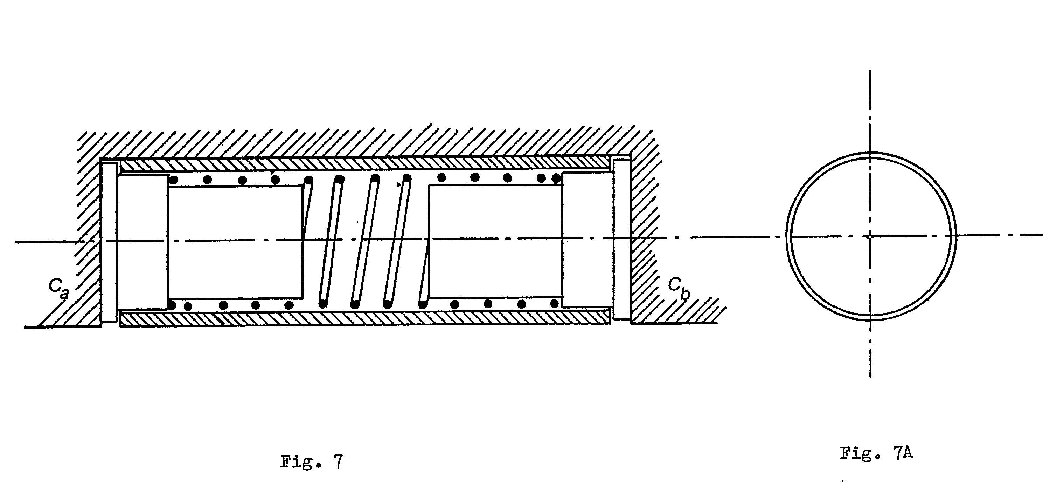

Das in Frage stehende Lager ist ein normales wie folgend abgeändertes und in der Fig. 1/7 dargestelltes Rollenlager. Die Ringe $B_1$, $B_2$ entsprechen den Ringen eines normalen Rollenlagers, welche zwischen den beiden Abrollbahnen die Rollen einschliessen; an die Stelle der kleinen Ränder treten die beiden dem Ring $B_2$ angehörigen Bünde $C_a$, $C_b$, welche die Kopfteile der Rollen vollkommen überdecken; der Innendurchmesser der Bünde $C_a$, $C_b$ ist bemessen, derart, um gegenüber dem Aussendurchmesser des Ringes $B_1$ ein vorbestimmtes Spiel aufzuweisen. An der Aussenfläche des Ringes $B_2$ ist eine Reihe von schraubenförmigen Kanälen in veränderlicher Anzahl (2-4-6-8 und mehr) entsprechend dem Durchmesser des Lagers, der Anzahl der Rollen und der aufgebrachten Lastart eingearbeitet; die Anzahl der schraubenförmigen Kanäle soll ein Divisor der Anzahl der Rollen sein, so dass man einen schraubenförmigen Kanal für je eine Rolle, je zwei Rollen, je drei Rollen, je vier Rollen usw. hat.

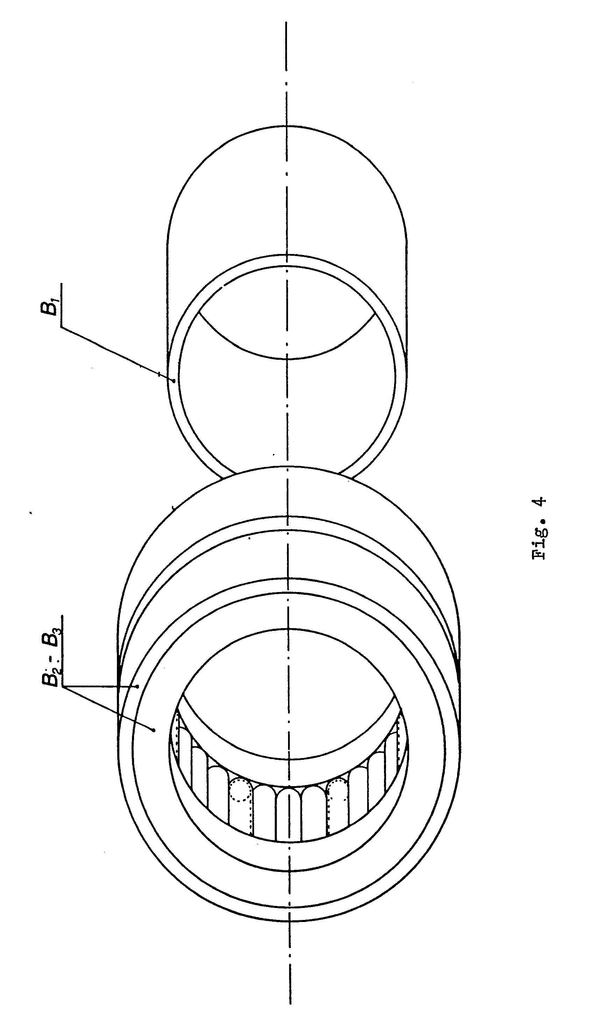

In der Zeichnung sind 32 Rollen und 8 schraubenförmige Kanäle vorgesehen, so dass jeder Kanal eine Kammer speist, in welcher vier Rollen eingesetzt sind; die schraubenförmigen Kanäle sind mit $C_1$, bzw. $C_2$, $C_3$, $C_4$, $C_5$, $C_6$, $C_7$, $C_8$ angegeben; die Kammern, welche jede Gruppe von vier Rollen enthalten, sind mit $S_1$, bzw. $S_2$, $S_3$, $S_4$, $S_5$, $S_6$, $S_7$, $S_8$ angegeben; die acht Rollen, welche die acht Kammern begrenzen, sind mit $T_1$, bzw. $T_2$, $T_3$, $T_4$, $T_5$, $T_6$, $T_7$, $T_8$ angegeben; schliesslich sind die Bohrungen, welche die schraubenförmigen Kanäle C mit den Kammern S verbinden, mit $F_1$, bzw. $F_2$, $F_3$, $F_4$, $F_5$, $F_6$, $F_7$, $F_8$ angegeben. An der Aussenfläche des Ringes $B_2$ ist ein Ring $B_3$ aufgepresst, welcher die Funktion hat die schraubenförmigen Kanäle C zu verschliessen, indem er dieselben in ebensoviele Leitungen umgestaltet, welche dazu bestimmt sind, den Druck eines Fluids teilweise abzubauen, welches diese durchquert; in Übereinstimmung mit dem mittleren diametralen Querschnitt des Ringes $B_3$ ist eine Ringleitung A eingearbeitet, welche mit der Aussenseite mittels einer im Gehäuse eingearbeiteten Bohrung kommuniziert, welches dazu bestimmt ist, das Lager aufzunehmen; von den schraubenförmigen Leitungen C, wie die Fig. 1/7 zeigt, sind vier im Teil rechts und vier im Teil links der Ringleitung A eingearbeitet, sie sind untereinander um 360/8 = 45 Grad verschoben und weisen einen Durchflusswiderstand des Fluids auf, welcher bedingt ist vom Umfang der am Lager vorgesehenen Höchstlast und vom vorgesehenen Spiel in der Passung zwischen den Bünden des Ringes $B_2$ und des Ringes $B_1$. In der Fig. 1/7 haben die Leitungen C eine Abwicklung von zwei schraubenförmigen Windungen, so dass jede Leitung C von der Ringleitung A ausgeht und in die darunter liegenden Kammern S einmündet; u.zw. münden die Leitungen $C_1$, $C_3$, $C_5$, $C_7$ über die entsprechenden Bohrungen $F_1$, $F_3$, $F_5$, $F_7$ auf die Kopfteile rechts der entsprechenden Kammern $S_1$, $S_3$, $S_5$, $S_7$ aus und die Leitungen $C_2$, $C_4$, $C_6$, $C_8$ münden über die entsprechenden Bohrungen $F_2$, $F_4$, $F_6$, $F_8$ auf die Kopfteile links der entsprechenden Kammern $S_2$, $S_4$, $S_6$, $S_8$ aus. Der an der Welle aufgepresste Ring $B_1$ ist in der Fig. 1/7 im halben Querschnitt ersichtlich und ist in der Fig. 4/7 gänzlich zu erkennen.

Bei dem in der Fig. 1/7 dargestellten Lagertyp umfasst jede Rollengruppe vollen Querschnittes eine hohle Rolle T, so dass zwei hohle Rollen eine gewisse Anzahl von Rollen vollen Querschnittes umfassen und so eine Kammer S begrenzen; während die Rollen vollen Querschnittes bemessen sind, derart, um wie in der ersten Gestaltung des Lagers ein zweckdienliches Spiel zu gewährleisten, sind die hohlen Rollen T mit leichtem Übermass montiert, so dass diese, wie auch immer die Exzentrizität des Ringes $B_2$ gegenüber dem Ring $B_1$ sein mag, gegenüber den beiden Abrollbahnen stets ein Übermass gewährleisten. Bei diesem Lagertyp ist die Kammer S aus der Gesamtheit der Hohlräume gebildet, welche zwischen den Rollen und den Abrollbahnen auftreten, wie die Angabe der Kammern S in der Fig. 1/7 zeigt; in diesen Hohlräumen befindet sich das Fluid unter leicht veränderlichem Druck je nach der Lage des Hohlraumes gegenüber der Mündung des Kanals F und ist leicht unterschiedlich von Hohlraum zu Hohlraum; aber der Drucksprung zwischen einer Kammer und den beiden angrenzenden Kammern ist bedeutend grösser.

Arbeitsweise des Lagers

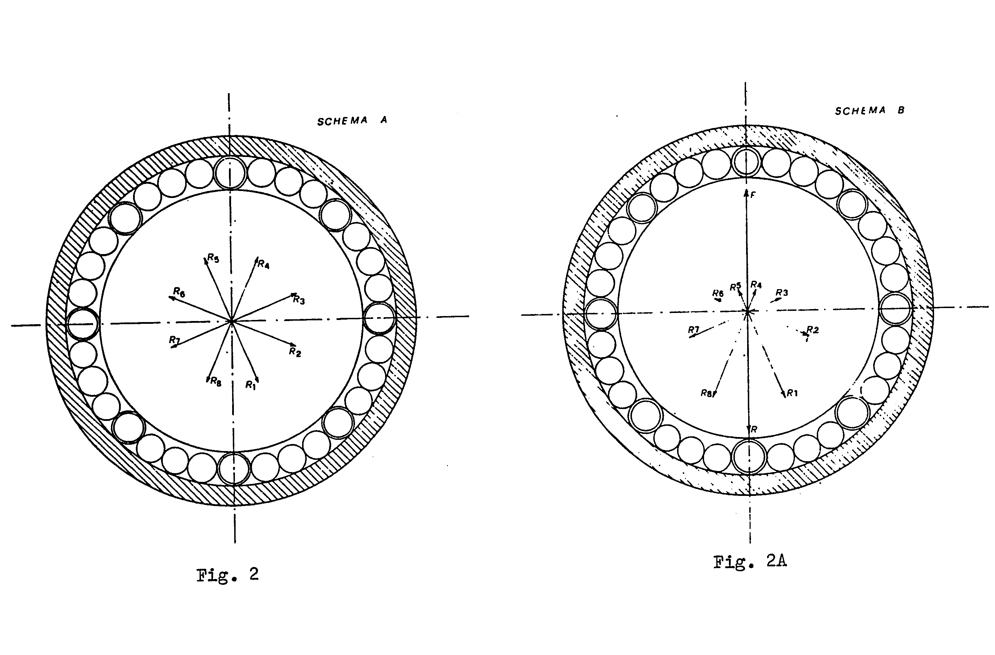

Das Fluid unter zweckdienlichem Druck wird zum Lager von einer Pumpe gesandt, welche dieses über einen Filter aus einer Wanne ansaugt, tritt über eine im Lager eingearbeitete Bohrung in die Ringleitung A (siehe Fig. 1/7) ein, wird von dieser in den Abbauleitungen des Druckes C aufgeteilt, bewegt sich in die Kammern S über die Bohrungen F und ergiesst sich nach aussen über die entsprechenden zwischen den Bünden $C_a$ und $C_b$ und dem Ring $B_1$ bestehenden Schmierspalte, wobei es sich in der Wanne ansammelt, von der es in den Kreislauf der Pumpe zurückgeführt wird. Wird angenommen, dass an der Welle keine Kraft angreift, so wird sich der Zapfen mit dem Lager als koaxial ergeben (Fig. 2/7 - Schema A) und es wird sich deswegen zwischen den Bünden und der Aussenfläche des Ringes $B_1$ ein Schmierspalt gleichmässiger Stärke entsprechend dem radialen Spiel ausbilden; das Fluid wird nach aussen von jeder Kammer S über die entsprechenden Schmierspalte mit gleichen Durchsätzen für jede Kammer fliessen; unter Beibehaltung des Einlaufdruckes im Lager werden die Durchsätze in jeder Abbauleitung C gleich sein und es wird deswegen der Druckabfall gleich sein; die Drücke in jeder Kammer S werden gleich sein, die radialen Kräfte R, welche am Zapfen infolge des Druckes des Fluids in den Kammern S angreifen, werden gleich sein und ihre Resultante wird gleich Null sein; man wird deswegen keine Gegenwirkung am Lager haben. Wird angenommen, dass an der Welle eine Last angreift, so wird der Zapfen gegenüber dem Lager eine exzentrische Stellung einnehmen (Fig. 2/7 - Schema B); zwischen den Bünden $C_a$ und $C_b$ und der Aussenfläche des Ringes $B_1$ wird sich ein Schmierspalt veränderlicher Stärke ausbilden, deren Mindestwert gleich dem radialen Spiel minus die Exzentrizität sein wird und deren Höchstwert gleich dem radialen Spiel plus die Exzentrizität sein wird; in diesem Fall wird der Durchsatz des Fluids nach aussen minimal sein für jene Kammer, welche sich in Übereinstimmung mit dem Schmierspalt kleinster mittlerer Stärke befindet, und wird für die nachfolgenden Kammern allmählich ansteigen bis maximal zu werden für jene Kammer, welche sich in Übereinstimmung mit dem Schmierspalt grösster mittlerer Stärke befindet; auch in den entsprechenden Abbauleitungen C, welche die Kammern S speisen, wird der Durchsatz verschieden sein für jede Leitung und wird sich zwischen einem Mindestwert und einem Höchstwert verändern; der Druckabfall, welcher in den Leitungen bei laminarem Zustand proportional dem Durchsatz ist, wird folglich für jede Leitung C verschieden sein; unter Beibehaltung des Wertes des Eingangsdruckes im Lager wird sich deshalb der Druck in den Kammern S ändern von einem Mindestwert in der Kammer entsprechend dem Schmierspalt grösster mittlerer Stärke zu einem Höchstwert in der Kammer entsprechend dem Schmierspalt kleinster mittlerer Stärke; die radialen Kräfte R, welche am Zapfen infolge des Druckes des Fluids in den Kammern S angreifen, werden eine Intensität proportional den Drücken haben und ihre Resultante (Fig. 2/7 - Schema B) wird gleich und entgegengesetzt zur Last sein. Der Wert der Gegenwirkung wird um so höher sein, je höher der Druck des Fluids am Eingang des Lagers, das Spiel und die Exzentrizität sein werden. Der Durchflusswiderstand des Fluids, welchen die Abbauleitungen entgegensetzen, hängt von deren Länge und von deren Durchschnitt ab; diese Leitungen müssen so bemessen werden, dass man einen optimalen Differenzdruck in den Kammern hat, dem der maximale Auftrieb des Lagers entspricht. Das Berechnungssystem des optimalen Auftriebes wird in diesem Bericht weggelassen. Die Abbauleitungen werden unterschiedliche Abmessungen und damit unterschiedliche Durchflusswiderstände des Fluids haben, wenn die Last annähernd konstanten Sinn und Richtung aufweist und nur in der Intensität veränderlich ist; sie werden alle dieselben Abmessungen haben, wenn die Last in Sinn und Richtung ausser in Intensität veränderlich ist. Ein Grenzwert für den maximalen Auftrieb des Lagers wird naheliegenderweise ausser von den Abmessungen des Lagers vom Erfordernis bestimmt werden, dem Eingangsdruck des Fluids und dem Spiel nicht übermässige Werte zu geben, denen übermässige Werte der Auftriebe entsprechen würden, und der Mindeststärke des Schmierspaltes nicht zu kleine Abmessungen zu geben mit Bezug auf den Fertigungs- und Genauigkeitsgrad der zusammenarbeitenden Oberflächen, damit an die Stelle der Flüssigkeitsreibung nicht eine Mischreibung tritt.

Originelle Merkmale des Lagers

Das Lager, wie es sich aus der vorstehenden Beschreibung ergibt, arbeitet unter Ausnützung des Prinzips des fluidstatischen Schwebens, bzw. Abstützens, ähnlich den gegenwärtig angewandten fluidstatischen Lagern, es weist jedoch originelle Merkmale auf, welche seine Arbeitsleistung stark verbessern und seine Verwendungsmöglichkeiten weitaus erhöhen, wie man den nachstehenden kurzen Erwägungen entnehmen kann: Die Einführung hohler Rollen stellt die grundlegende Originalität und den bemerkenswertesten Vorteil des in Untersuchung stehenden Lagers dar. Die Einführung von so vielen hohlen Rollen wie viele die Abbaukanäle sind (im gezeichneten Lager ist ein Kranz von 32 Rollen vorgesehen, von denen 24 vollen Querschnittes und 8 ringförmigen Querschnittes – siehe Fig. 1/7 – sind) schafft eine gewisse Anzahl von Kammern (im Lager 8 eingezeichnet) mit annähernd konstantem Druck in jeder Kammer, und da die hohlen Rollen wie erwähnt mit leichtem Übermass montiert sind, können die Kammern hinsichtlich des Durchtritts des Fluids von einer Kammer zur anderen Kammer als fast dicht angesehen werden; der Wert des Differenzialdrucks steigt somit stark an und mit ihm steigt der Auftrieb des Lagers stark an. Bei angestellten Berechnungen und Versuchen konnte die Zunahme des Auftriebes 30% bis 50% grösser bewertet werden als bei einem analogen Rollenlager, dessen Rollen alle vollen Querschnittes sind. Wenn man es wünscht, die Dichtigkeit der Kammern weiters zu steigern, können mit flachen kleinen Köpfen versehene hohle Rollen vorgesehen sein, welche von der leichten Wirkung von Federn gezwungen werden an der Stirnfläche der Ränder anzuliegen, wie dies die Zeichnung der Fig. 7/7 andeutet. Das Übermass, mit dem die hohlen Rollen montiert werden müssen, ist gering und muss so sein, um die Berührung zwischen den hohlen Rollen und den Abrollbahnen zu gewährleisten, u.zw. wie auch immer die Exzentrizität sein mag, mit der das Lager in Abhängikeit von der Last arbeitet. Z.B. in einem Lager, für das ein radiales Spiel von 0,05 mm mit einer maximalen Exzentrizität von 0,04 mm vorgesehen ist, kann das Übermass der hohlen Rollen bei zentrierter Welle in Lastabwesenheit 0,05 mm sein, weshalb, wenn das Lager mit der maximalen Exzentrizität arbeitet, das maximale Übermass $0,05 + 0,04 = 0,09$ mm sein wird und das minimale Übermass $0,05 - 0,04 = 0,01$ mm sein wird. Bei einem solchen Lager sind die hohlen Rollen einer Ermüdungsbeanspruchung unterworfen. Ohne auf die diesbezüglichen Berechnungseigenarten einzugehen, kann man behaupten, dass die Einheitswerte der Ermüdungsbeanspruchung relativ hoch sein werden für die Rollen kleinen Durchmessers und dazu neigen stark abzunehmen mit der Zunahme des Durchmessers der Rollen; in jedem Fall, und dies auch für Rollen kleinen Durchmessers, wird die Ermüdungsbeanspruchung weit unter jener liegen, welche von den zahlreichen heute verfügbaren ermüdungsbeständigen Edelstahltypen zugelassen ist.

Aufbau des Lagers

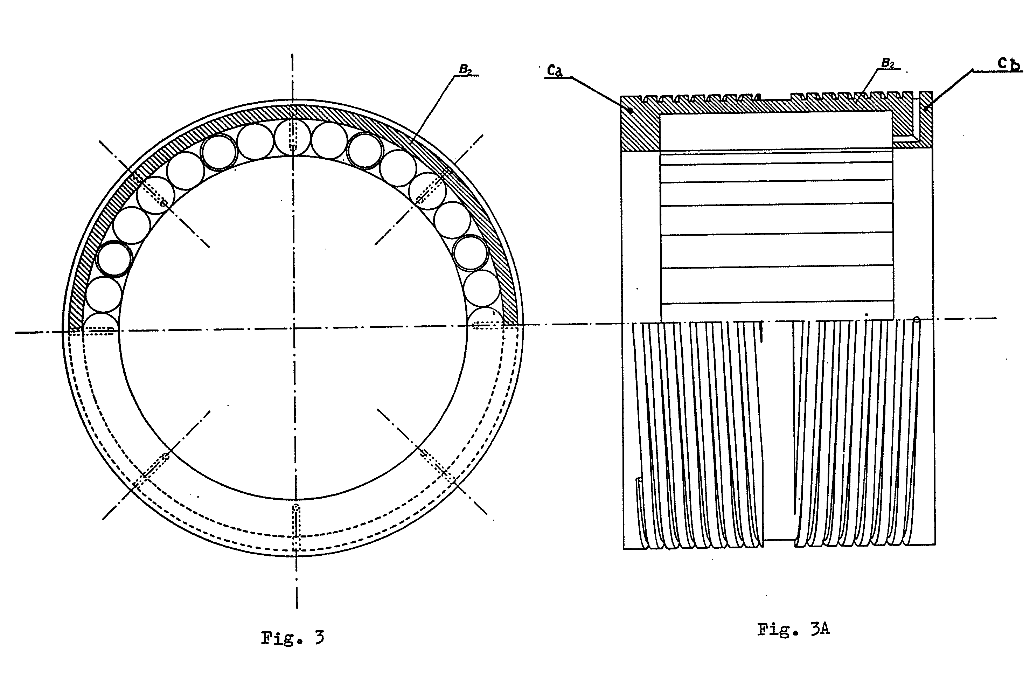

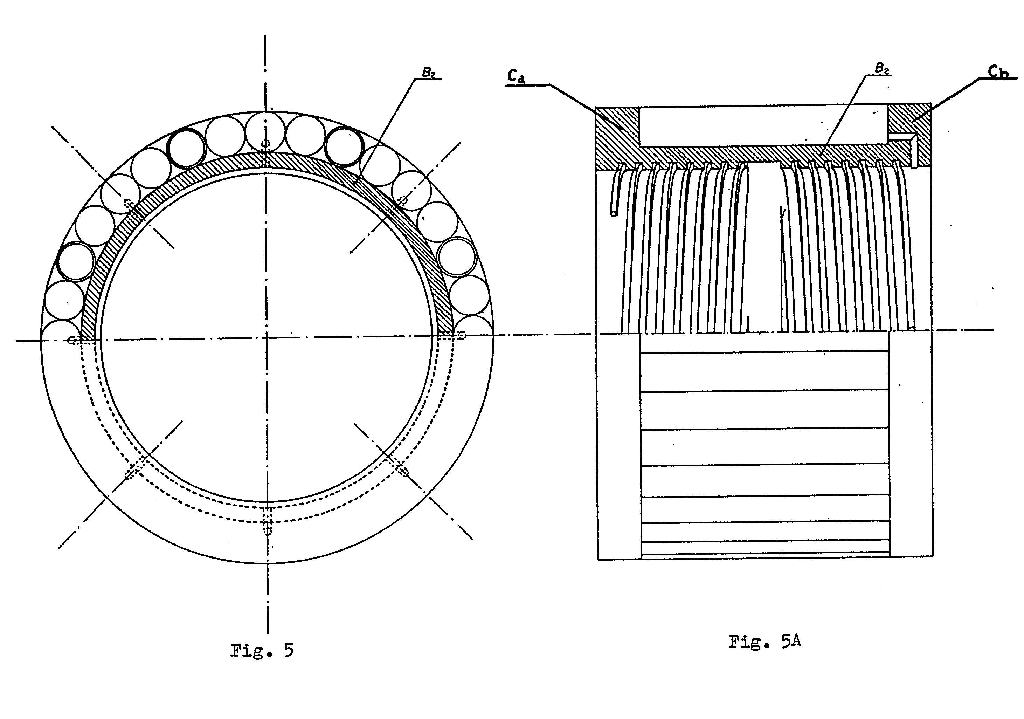

Das Lager wird in zwei Ausführungsformen angeboten: ein Lager für rotierende Welle und ein Lager für stillstehende Welle. Das Lager für die drehende Welle (Figuren 3 u. 4) besteht aus dem Ring $B_2$, welcher die Abrollbahn innen und die schraubenförmigen Leitungen aussen trägt; an der Aussenfläche des Ringes $B_2$ ist der Ring $B_3$ aufgepresst; der Ring $B_1$, welcher dazu bestimmt ist am Zapfen aufgeschrumpft, bzw. aufgepresst, zu werden, befindet sich mit Laufpassung mit vorbestimmten Spiel gegenüber den Bünden $C_a$ und $C_b$ und den rollenden Körpern; die Speisung des Fluids erfolgt über das feste Gehäuse der Auflage, d.h. des Lagers. Das Lager für feste Welle (Figuren 5 u. 6) besteht aus dem Ring $B_2$, welcher die Abrollbahn aussen und die schraubenförmigen Leitungen innen trägt; an der Innenfläche des Ringes $B_2$ ist der Ring $B_1$ aufgepresst; der Ring $B_3$, welcher dazu bestimmt ist im Gehäuse der Auflage, d.h. des Lagers aufgepresst zu werden, befindet sich mit Laufpassung mit vorbestimmtem Spiel gegenüber den Bünden $C_a$ und $C_b$ und den rollenden Körpern; die Speisung des Druckfluids erfolgt über eine in der Welle eingearbeitete Leitung. Beide Lagertypen sind mit den normalen für Rollenlager angewandten Bearbeitungsverfahren hergestellt. Die Bearbeitungstoleranzen hinsichtlich der Passungen der aufgepressten Ringe sind jene normalen für Übermasspassungen; die Bearbeitungstoleranzen hinsichtlich der Passungen zwischen freien Ringen sind jene normalen für freie Passungen, d.h. Laufpassungen; die Passungen können mit mittlerer Toleranz für laufende Lager verwirklicht werden, sie müssen jedoch von Genauigkeit nur für Lager hoher Starrheit sein. Die Montage wird verwirklicht, indem die Normen für die Montage der Wälzlager eingehalten werden.

Anwendung des Lagers

Das in Untersuchung stehende Lager weist ein weitgehendes Verwendungsbereich auf; es kann mit Zylinderrollen, kegelförmigen Rollen, Fassrollen und Rollen mit jedem beliebigen anderen Profil gebaut werden; es kann für kleine, mittlere und grosse Lasten zur Anwendung kommen; es kann mit relativ weiten Toleranzen für laufende Lager, mit engen Toleranzen für Präzisionslager bemessen werden. Das Lager kann auf drei verschiedene Arten zur Anwendung kommen:

a) Mit völliger fluidstatischer Abstützung für mittlere und starke Lasten und für jegliche Geschwindigkeit, wenn keine Raumbedarfsprobleme vorliegen.

b) Mit gemischter Abstützung, wobei die fluidstatische Abstützung die Funktion hat die Last auf den Rollen in mehr oder weniger hohem Ausmass zu erleichtern im Fall der mittleren und starken Lasten und wenn Raumbedarfsprobleme vorliegen.

Es ist hier zweckmässig daran zu erinnern, dass aus den weitbekannten Versuchen über Lebensdauer eines Lagers in Bezug auf die spezifische Beanspruchung an den rollenden Körpern und an den Abrollbahnen hervorgegangen ist, dass die Lebensdauer auch für geringfügige Verminderungen der spezifischen Beanspruchung stark angestiegen ist. Z.B. mit einer Beihilfe der fluidstatischen Abstützung von 30% der Last weist das Lager eine ungefähr 500mal grössere theoretische Lebensdauer auf. Es ist zu vergegenwärtigen, dass die Lebensdauer des Lagers durch die Gegenwart des schierenden Fluids weiterhin angestiegen ist.

c) Mit gemischter Abstützung bei maximaler fluidstatischer Abstützung und bei maximaler Last auf den Rollen für sehr hohe Lasten und wenn Raumbedarfsprobleme vorliegen.

Es ist wichtig noch zu unterstreichen, dass auch im Fall des Ausbleibens des Druckes des Fluids das Lager zum Unterschied von den gegenwärtig gebauten fluidstatischen Lagern ohne jegliche Festfressgefahr weiter arbeiten kann. Die Dauer seiner Wirkungsweise würde in diesem Fall natürlich vom Ausmass der angreifenden Last bedingt sein; mit anderen Worten die Dauer der anomalen Arbeitsweise könnte lang sein, wenn die Last innerhalb der zugelassenen Werte für normale Rollenlager enthalten wäre, sie könnte jedoch um so kürzer sein, je mehr das Lager über diese Grenzen belastet sein sollte. Es ist allenfalls klar, dass das in Untersuchung stehende Lager in den meisten Fällen normal mit der fluidstatischen Abstützung arbeiten sollte und nur für kurze Dauer und in Notfällen ohne die fluidstatische Abstützung arbeiten könnte.

**Patentansprüche**

1. Drehlager bestehend aus einem Innenring ($B_1$) mit Abrollbahn, einem Aussenring ($B_2$) mit Abrollbahn, zwischen den Abrollbahnen angeordneten Rollen und einer Anzahl von über den Lagerumfang verteilten Bohrungen (C) zur Speisung eines Druckfluides in den Spalt zwischen Innenring ($B_1$) und Aussenring ($B_2$), dadurch gekennzeichnet, dass die Rollen durch hohle, mit leichtem Übermass montierte Rollen (T) in Gruppen gleicher Anzahl unterteilt sind, wobei die Anzahl der Bohrungen (C) der Anzahl der Gruppen entspricht.

2. Drehlager, nach Anspruch 1, dadurch gekennzeichnet, dass in den Enden der hohlen Rollen (T) Dichtstössel montiert sind, welche mittels Federn gegen radial abstehende Bünde eines Ringes gedrückt sind.

3. Drehlager, mit feststehendem Gehäuse, nach Anspruch 1 und 2, dadurch gekennzeichnet, dass die Bohrungen im Aussenring ($B_2$) eingearbeitet sind.

4. Drehlager, mit feststehender Welle, nach Anspruch 1 und 2, dadurch gekennzeichnet, dass die Bohrungen im Innenring ($B_1$) eingearbeitet sind.

5. Drehlager, nach Anspruch 1 und 2, dadurch gekennzeichnet, dass die zwischen den Ringen ($B_1$, $B_2$) angeordneten Rollen zylindrisch gestaltet sind.

6. Drehlager, nach Anspruch 1 und 2, dadurch gekennzeichnet, dass die zwischen den Ringen ($B_1$, $B_2$) angeordneten Rollen konisch gestaltet sind.

## Claims

1. A roller bearing consisting of an inner ring $(B_1)$ with a rolling track, an outer ring $(B_2)$ with a rolling track, rollers arranged between the rolling tracks and a number of bores (C) distributed through the bearing's circle for feeding a compressed medium in to the space comprised between the inner ring $(B_1)$ and the outer ring $(B_2)$, characterized by that the rollers are subdivided by means of hollow rollers (T) mounted with a slight interference according to groups having an equal number of elements, wherein the number of the bores (C) corresponds to the number of groups.

2. A roller bearing according to Claim 1, characterized by that at the ends of the hollow rollers (T) sealing's pushers are mounted which, by means of springs, are pressed against collars projecting radially from a ring.

3. A roller bearing with fixed box according to Claims 1 and 2, characterized by that the bores are machined in to the outer ring $(B_2)$.

4. A roller bearing with fixed shaft, according to Claim 1 and 2, characterized by that the bores are machined into the inner ring $(B_1)$.

5. A roller bearing according to Claim 1 and 2, characterized by that the rollers arranged between the rings $(B_1, B_2)$ are cylindrical.

6. A roller bearing according to the Claim 1 and 2, characterized by that the rollers arranged between the rings $(B_1, B_2)$ are cone-shaped.

## Revendications

1. Roulement à rouleaux se composant d'un anneau interne $(B_1)$ avec bague de roulement, un anneau externe $(B_2)$ avec bague de roulement, des rouleaux disposés entre les bagues de roulement, et un certain nombre de trous (C) distribués à travers de la circonférence du roulement dans le but de permettre l'alimentation pour un fluide comprimé dans l'espace entre l'anneau interne $(B_1)$ et l'anneau externe $(B_2)$, caractérisé par le fait que les rouleaux sont partagés, moyennant des rouleaux creux (T) montés avec une légère interférence, en groupes ayant tous le même nombre, le nombre de trous correspondant au nombre de groupes.

2. Roulement à rouleaux selon la Revendication 1, caractérisé par le fait que, aux extrémités, des rouleaux creux (T), de refouleurs d'étanchéification sont montés, lesquels, moyennant des ressorts, sont pressés contre des colliers qui saillissent en étoile d'un anneau.

3. Roulement à rouleaux à boîte fixe selon les Revendications 1 et 2, caractérisé par le fait que les trous sont façonnés dans l'anneau externe $(B_2)$.

4. Roulement à rouleaux à arbre fixe selon les Revendications 1 et 2, caractérisé par le fait que les trous sont executés dans l'anneau interne $(B_1)$.

5. Roulement à rouleaux selon les Revendications 1 et 2, caractérisé par le fait que les rouleaux arrangés entre le anneaux $(B_1$ et $B_2)$ sont cylindriques.

6. Roulement à rouleaux selon les Revendications 1 et 2, caractérisé par le fait que les rouleaux arrangés entre les anneaux $(B_1$ et $B_2)$ sont de forme conique.

Fig. 1A

Fig. 1

SCHEMA A

Fig. 2

SCHEMA B

Fig. 2A

Fig. 3

Fig. 3A

$B_2 - B_3$

$B_1$

Fig. 4

0 110 001

Fig. 5A

Fig. 5

$B_2 - B_1$

$B_3$

Fig. 6

0 110 001

Fig. 7A

Fig. 7